# FASCICULE DE BREVET EUROPEEN

(11) **EP 2 966 414 B1**
(45) Date de publication et mention de la délivrance du brevet: **04.09.2019**
(21) Numéro de dépôt: 15175561.8
(22) Date de dépôt: 07.07.2015
(51) Int. Cl.: G01D 5/245

(54) **MONTAGE D'UN SYSTÈME DE DÉTERMINATION DE POSITION ANGULAIRE SUR UN ORGANE TOURNANT**
MONTAGE EINES SYSTEMS ZUR BESTIMMUNG DER WINKELPOSITION AUF EINEM DREHORGAN
MOUNTING OF A SYSTEM FOR DETERMINING ANGULAR POSITION ON A ROTATING MEMBER

(30) Priorité: 07.07.2014 FR 1456535
(43) Date de publication de la demande: 13.01.2016
(73) Titulaire: NTN-SNR Roulements, 74010 Annecy (FR)
(72) Inventeur: DURET, Christophe, 74290 BLUFFY (FR); PETERSCHMITT, Cyril, 74330 LA BALME DE SILLINGY (FR)
(74) Mandataire: Sayettat, Julien Christian

(56) Documents cités:
- EP-A1- 1 568 971
- EP-A1- 2 163 851
- EP-A1- 2 546 611
- WO-A1-2013/114705
- US-A1- 2012 126 797
- US-A1- 2012 194 175

## Description

L'invention concerne un montage d'un système de détermination de position angulaire sur un organe tournant.

Pour déterminer la position angulaire absolue d'un organe tournant, on connait, notamment du document EP-2 163 851, un système comprenant :
- un codeur destiné à être solidaire en rotation dudit organe tournant, ledit codeur comprenant une piste magnétique multipolaire principale et une piste magnétique multipolaire secondaire qui sont aptes chacune à émettre un signal magnétique périodique représentatif du déplacement du codeur ; et
- un capteur présentant deux motifs d'éléments sensibles qui sont aptes à détecter les signaux délivrés par les pistes du codeur, chaque motif étant disposé à distance de lecture d'une piste pour former un signal représentatif de la position angulaire de ladite piste, ledit capteur comprenant en outre un dispositif de traitement des signaux issus des motifs pour déterminer la position angulaire absolue de l'organe tournant.

En particulier, le document EP-1 353 151 prévoit que la piste secondaire comprenne un nombre de pôles magnétiques qui est différent de celui de la piste principale, de sorte à pouvoir déterminer simplement la position angulaire selon le principe du vernier.

Ce type de systèmes de détermination présente l'avantage de prévoir un seul capteur pour lire chacune des pistes et pour traiter les signaux correspondants, chaque motif étant agencé pour pouvoir être disposé suivant une surface qui s'étend à distance de lecture de la piste.

En particulier, pour que chacun des motifs d'éléments sensibles détecte un niveau de signal magnétique comparable, lesdits motifs peuvent être disposés suivant une même surface de lecture qui s'étend à une distance de lecture sensiblement constante par rapport aux pistes magnétiques multipolaires. Toutefois, la disposition des motifs suivant l'art antérieur ne donne pas entièrement satisfaction relativement à la fiabilité de la détection des signaux magnétiques émis, notamment en étant trop sensible aux dispersions de distance de lecture lors du montage du capteur par rapport au codeur.

Ce problème est d'autant plus pénalisant pour déterminer une position angulaire absolue puisque, en imposant un positionnement conjoint de chacun des motifs d'éléments sensibles, l'utilisation d'un capteur unique contraint la distance de lecture des pistes alors même que la qualité du signal magnétique émis par lesdites pistes est médiocre du fait de leur proximité.

L'invention a pour but de résoudre les problèmes de l'art antérieur en proposant notamment un montage dans lequel les motifs d'éléments sensibles sont disposés par rapport aux pistes magnétiques de sorte à fiabiliser la détection des signaux magnétiques émis et donc à améliorer la précision de la détermination de la position angulaire absolue d'un organe tournant.

A cet effet, l'invention propose un montage d'un système de détermination de position angulaire sur un organe tournant selon la revendication 1.

D'autres objets et avantages de l'invention apparaîtront dans la description qui suit, faite en référence aux figures annexées, dans lesquelles :
- les figures 1 sont des représentations schématiques d'un montage radial d'un capteur par rapport à un codeur selon l'invention, respectivement en perspective (figure 1a), vue de côté (figure 1b) et vue de face (figure 1c) ;
- les figures 2 sont des représentations schématiques d'un montage facial d'un capteur par rapport à un codeur selon l'invention, respectivement en perspective (figure 2a) et vue de face (figure 2b).

En relation avec ces figures, on décrit ci-dessous le montage d'un système de détermination de position angulaire sur un organe tournant (non représenté). Dans un exemple d'application, l'organe tournant est un arbre d'un moteur électrique et la détermination de la position angulaire est utilisée pour piloter ledit moteur.

En particulier, la position angulaire peut être déterminée de façon absolue, c'est-à-dire par rapport à une position de référence, et immédiatement à la mise sous tension du système, sans nécessiter une rotation minimale de l'organe tournant. Pour ce faire, le système de détermination comprend un codeur 1 qui est solidaire en rotation de l'organe tournant, ledit codeur comprenant une piste magnétique principale 2 et une piste magnétique secondaire 3.

En particulier, les pistes magnétiques 2, 3 sont multipolaires, c'est-à-dire qu'elles présentent chacune une succession alternée de pôles Nord et Sud qui s'étend selon la direction de rotation de l'organe tournant. Ainsi, chacune des pistes 2, 3 est apte à émettre un signal magnétique périodique représentatif du déplacement du codeur 1, notamment un signal de forme pseudo-sinusoïdal.

Dans les modes de réalisation représentés, le codeur 1 est formé d'un aimant sur lequel les pistes magnétiques multipolaires 2, 3 sont réalisées. En particulier, l'aimant peut être formé d'une matrice annulaire, par exemple réalisée à base d'un matériau plastique ou élastomère, dans laquelle sont dispersées des particules magnétiques, notamment des particules de ferrite ou de terres rares comme le NdFeB. En variante, chaque piste 2, 3 peut être formée sur un aimant distinct.

Le système de détermination comprend un capteur 4 pourvu de deux motifs 5 d'éléments sensibles magnétiques qui sont aptes à détecter les signaux délivrés par les pistes 2, 3 du codeur 1. En particulier, chaque motif 5 peut comprendre au moins deux éléments sensibles, notamment une pluralité d'éléments sensibles alignés tel que décrit dans les documents FR-2 792 403, EP-2 602 593 ou EP-2 602 594.

Ainsi, en disposant les motifs 5 respectivement à distance de lecture d'une piste 2, 3, il est possible de former un signal représentatif de la position angulaire de ladite piste. Par ailleurs, le capteur 4 comprend un dispositif 6 de traitement des signaux issus des motifs 5 pour déterminer la position angulaire absolue de l'organe tournant.

Dans un exemple de réalisation, la piste secondaire 3 comprend un nombre de pôles magnétiques qui est différent de celui de la piste principale 2, notamment en prévoyant de faire coïncider les pôles aux points de début et de fin desdites pistes, tout en ayant un décalage desdits pôles le long desdites pistes.

En particulier, pour une mesure absolue sur un tour, la piste principale 2 comprend une succession de N pôles et la piste secondaire 3 comprend une succession de N-1 pôles. Dans une variante permettant la mesure absolue sur une portion 1/Q du tour, la piste principale 2 comprend une succession de QxN pôles et la piste secondaire 3 comprend une succession de Qx(N-1) pôles.

Dans cette réalisation, comme notamment enseigné par le document EP-1 353 151, le dispositif 6 de traitement peut utiliser le principe du vernier magnétique pour déterminer la position angulaire absolue par comparaison des signaux de position angulaire issus de chacun des motifs 5.

Selon une autre réalisation enseignée par le document EP-2 372 313, chaque motif 5 permet de former un signal qui comprend la phase de la position angulaire d'une piste 2, 3, le dispositif 6 de traitement calculant une différence entre lesdites phases pour en déduire la position angulaire absolue du codeur 1.

Chaque élément sensible des motifs 5 présente au moins une couche sensible 7 à base d'un matériau magnétorésistif, notamment à effet tunnel, dont la résistance varie en fonction du signal magnétique de la piste 2, 3 à détecter. En particulier, comme décrit par exemple dans le document WO-2004/083881, chaque élément sensible des motifs 5 est formé de jonctions tunnel comprenant un empilement d'une couche magnétique de référence, d'une couche de séparation et d'une couche magnétique 7 sensible au champ à détecter, la résistance entre les couches magnétiques étant fonction de l'orientation relative de leur aimantation.

Pour former le signal représentatif de la position angulaire de la piste 2, 3, chaque motif 5 est disposé suivant une surface de lecture S qui s'étend à distance de lecture L d'une piste 2, 3. En particulier, la surface de lecture S s'étend par rapport à la piste 2, 3 suivant une distance de lecture L qui est sensiblement constante afin que chaque élément sensible des motifs 5 puisse détecter un signal magnétique dont l'amplitude est sensiblement constante.

En outre, les motifs 5 peuvent être disposés suivant une même surface de lecture S, notamment afin que les pistes magnétiques 2, 3 s'étendent à une même distance de lecture L desdits motifs. Ainsi, les motifs 5 peuvent détecter des signaux magnétiques sensiblement de même amplitude, ce qui simplifie la détermination de la position angulaire absolue par comparaison desdits signaux.

Chaque motif 5 est disposé de sorte que la couche sensible 7 s'étende dans un plan général P qui est perpendiculaire à la surface de lecture S de la piste 2, 3. Ainsi, la disposition de la couche sensible 7 par rapport aux pistes 2, 3 permet de détecter le champ magnétique tournant qui est émis perpendiculairement auxdites pistes, ladite détection étant moins sensible à la valeur et aux dispersions de distance de lecture L que la détection du champ magnétique qui est émis par les pistes 2, 3 suivant la surface de lecture S.

De façon avantageuse, les motifs 5 présentent une longueur qui s'étend le long de la piste magnétique 2, 3 afin que le champ magnétique tournant puisse être détecté par la couche sensible 7 suivant ladite longueur. Par ailleurs, les pistes 2, 3 présentent une géométrie annulaire concentrique par rapport à l'axe de rotation de l'organe tournant.

Dans les modes de réalisation représentés, le capteur 4 comprend une carte électronique 8 sur laquelle le dispositif de traitement 6 est implanté. En particulier, la carte 8 présente deux faces 8a, 8b sur lesquelles respectivement un motif 5 est disposé. De façon avantageuse, les couches sensibles 7 s'étendent parallèlement aux faces 8a, 8b sur lesquelles elles sont disposées, ce qui simplifie l'intégration du capteur 4, notamment dans un boîtier en forme de tube de petit diamètre, pour sa fixation par rapport au codeur 1.

En outre, les deux motifs 5, seuls ou chacun sur un circuit imprimé, peuvent présenter la même configuration. De façon avantageuse, les éléments sensibles des motifs 5 peuvent être tous identiques, c'est alors leur nombre et leur disposition le long de la direction tangentielle de mesure qui fait la fonctionnalité du capteur 4 et non différentes configurations desdits éléments.

La configuration des deux pistes 2, 3 (notamment relativement à leur longueur polaire et à leur écartement), des deux motifs 5 (notamment relativement à leur écartement) et de leur positionnement relatif est dimensionnée pour éviter entre autres l'interférence d'une piste 2 sur l'autre 3 lors de la mesure.

En particulier, on peut écarter axialement ou radialement les deux motifs 5 en les plaçant de part et d'autre d'une carte électronique 8 dont l'épaisseur détermine cet écartement. Eventuellement, on peut accroître cet écartement en plaçant les motifs 5 sur un ou plusieurs circuits imprimés supplémentaires d'épaisseur choisie et en empilant le tout axialement ou radialement.

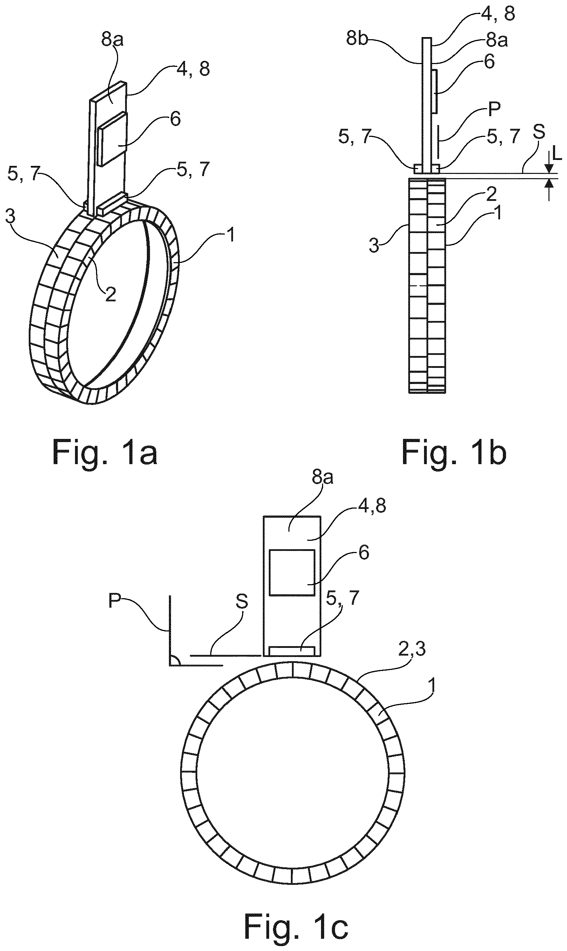

En relation avec les figures 1, les pistes magnétiques multipolaires 2, 3 sont formées le long de la périphérie extérieure de la géométrie annulaire de l'aimant, notamment en étant adjacentes et alignées axialement. La surface de lecture S s'étend circonférentiellement autour de la périphérie en délimitant une distance de lecture L sensiblement constante entre ladite surface et les pistes 2, 3.

Sur la figure 1c, la surface de lecture S est approximée au plan tangent à la périphérie au niveau du motif 5, la distance de lecture L demeurant sensiblement constante le long du motif 5 qui s'étend linéairement le long dudit plan.

La carte électronique 8 est positionnée radialement entre les pistes 2, 3 avec chaque motif 5 disposé de part et d'autre axialement pour être à distance de lecture radiale d'une piste 2, 3. Chaque motif 5 est disposé de sorte que la couche sensible 7 des éléments sensibles présente une hauteur qui s'étend radialement pour permettre une détection radiale du champ magnétique tournant.

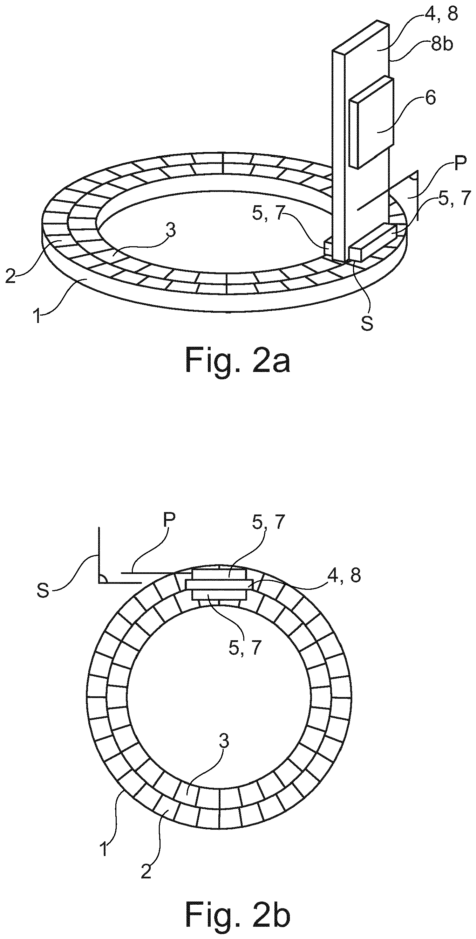

En relation avec les figures 2, les pistes magnétiques multipolaires 2, 3 sont formées sur une paroi latérale de la géométrie annulaire de l'aimant, notamment en étant adjacentes et alignées radialement. La surface de lecture S s'étend suivant un plan parallèlement à la paroi en délimitant une distance de lecture L sensiblement constante entre ladite surface et les pistes 2, 3.

La carte électronique 8 est positionnée axialement entre les pistes 2, 3 avec chaque motif 5 disposé de part et d'autre radialement pour être à distance de lecture axiale d'une piste 2, 3. Chaque motif 5 est disposé de sorte que la couche sensible 7 des éléments sensibles présente une hauteur qui s'étend axialement pour permettre une détection axiale du champ magnétique tournant.

## Revendications

1. Montage d'un système de détermination de position angulaire sur un organe tournant, ledit système comprenant :
- un codeur (1) qui est solidaire en rotation dudit organe tournant, ledit codeur comprenant une piste magnétique principale (2) et une piste magnétique secondaire (3) qui sont aptes chacune à émettre un signal magnétique périodique représentatif du déplacement dudit codeur ; et
- un capteur (4) présentant deux motifs (5) d'éléments sensibles qui sont aptes à détecter les signaux délivrés par les pistes (2, 3) du codeur (1), chaque motif (5) étant disposé suivant une surface de lecture (S) qui s'étend à une distance de lecture (L) d'une piste (2, 3) pour former un signal représentatif de la position angulaire de ladite piste, ledit capteur comprenant en outre un dispositif (6) de traitement des signaux issus des motifs (5) pour déterminer la position angulaire absolue de l'organe tournant ;
chaque élément sensible des motifs (5) présentant au moins une couche sensible (7) à base d'un matériau magnétorésistif dont la résistance varie en fonction du signal magnétique de la piste (2, 3) à détecter, chaque motif (5) étant disposé de sorte que ladite couche sensible s'étende dans un plan général (P) qui est perpendiculaire à la surface de lecture (S) de ladite piste, ledit montage étant **caractérisé en ce que** le capteur (4) comprend une carte électronique (8) présentant deux faces (8a, 8b) sur lesquelles respectivement un motif (5) est disposé.

2. Montage selon la revendication 1, **caractérisé en ce que** les motifs (5) présentent une longueur qui s'étend le long de la piste magnétique (2, 3).

3. Montage selon l'une des revendications 1 ou 2, **caractérisé en ce que** la surface de lecture (S) s'étend par rapport à la piste (2, 3) suivant une distance de lecture (L) qui est sensiblement constante.

4. Montage selon l'une quelconque des revendications 1 à 3, **caractérisé en ce que** les motifs (5) sont disposés suivant une même surface de lecture (S).

5. Montage selon l'une quelconque des revendications 1 à 4, **caractérisé en ce que** les pistes magnétiques (2, 3) s'étendent à une même distance de lecture (L) des motifs (5).

6. Montage selon l'une quelconque des revendications 1 à 5, **caractérisé en ce que** les pistes magnétiques (2, 3) présentent une géométrie annulaire concentrique par rapport à l'axe de rotation de l'organe tournant.

7. Montage selon la revendication 6, **caractérisé en ce que** les pistes magnétiques (2, 3) sont formées le long de la périphérie extérieure de la géométrie annulaire, la surface de lecture (S) s'étendant circonférentiellement autour de ladite périphérie et chaque motif (5) étant disposé de sorte que la couche sensible (7) des éléments sensibles présente une hauteur qui s'étend radialement.

8. Montage selon la revendication 6, **caractérisé en ce que** les pistes magnétiques (2, 3) sont formées sur une paroi latérale de la géométrie annulaire, la surface de lecture (S) s'étendant parallèlement à ladite paroi et chaque motif (5) étant disposé de sorte que la couche sensible (7) des éléments sensibles présente une hauteur qui s'étend axialement.

9. Montage selon l'une quelconque des revendications 1 à 8, **caractérisé en ce que** le matériau magnétorésistif est à effet tunnel.

10. Montage selon la revendication 9, **caractérisé en ce que** chaque élément sensible des motifs (5) est formé de jonctions tunnel comprenant un empilement d'une couche magnétique de référence, d'une couche de séparation et d'une couche sensible (7), la résistance entre les couches magnétiques étant fonction de l'orientation relative de leur aimantation.

11. Montage selon l'une quelconque des revendications 1 à 10, **caractérisé en ce que** le codeur (1) est formé d'un aimant sur lequel les pistes magnétiques (2, 3) sont réalisées.

12. Montage selon l'une quelconque des revendications 1 à 11, **caractérisé en ce que** la piste secondaire (3) comprend un nombre de pôles magnétiques qui est différent de celui de la piste principale (2).

13. Montage selon l'une quelconque des revendications 1 à 12, **caractérisé en ce que** les couches sensibles (7) s'étendent parallèlement aux faces (8a, 8b) sur lesquelles elles sont disposées.

## Patentansprüche

1. Aufbau eines Winkelposition-Bestimmungssystems auf einem Drehelement, wobei das System Folgendes umfasst:
- einen Codierer (1), der drehfest mit dem Drehelement verbunden ist, wobei der Codierer eine Hauptmagnetspur (2) und eine Nebenmagnetspur (3) umfasst, die jeweils geeignet sind, um ein periodisches magnetisches Signal, das für die Verlagerung des Codierers repräsentativ ist, abzugeben; und
- einen Sensor (4) der zwei Muster (5) empfindlicher Elemente aufweist, die geeignet sind, um die Signale zu erfassen, die von den Spuren (2, 3) des Codierers (1) geliefert werden, wobei jedes Muster (5) gemäß einer Leseoberfläche (S) angeordnet ist, die sich in einem Leseabstand (L) von einer Spur (2, 3) erstreckt, um ein Signal zu bilden, das für die Winkelposition der Spur repräsentativ ist, wobei der Sensor außerdem eine Vorrichtung (6) zur Verarbeitung der Signale, die aus den Mustern (5) hervorgehen, umfasst, um die Absolutwinkelposition des Drehelements zu bestimmen;
wobei jedes empfindliche Element der Muster (5) mindestens eine empfindliche Schicht (7) auf der Basis eines magnetoresistiven Materials aufweist, dessen Widerstand in Abhängigkeit von dem magnetischen Signal der zu erfassenden Spur (2, 3) variiert, wobei jedes Muster (5) derart angeordnet ist, dass sich die empfindliche Schicht in einer allgemeinen Ebene (P) erstreckt, die zu der Leseoberfläche (S) der Spur senkrecht ist, wobei der Aufbau **dadurch gekennzeichnet ist, dass** der Sensor (4) eine elektronische Karte (8) umfasst, die zwei Flächen (8a, 8b) aufweist, auf welchen jeweils ein Muster (5) angeordnet ist.

2. Aufbau nach Anspruch 1, **dadurch gekennzeichnet, dass** die Muster (5) eine Länge aufweisen, die sich entlang der Magnetspur (2, 3) erstreckt.

3. Aufbau nach einem der Ansprüche 1 oder 2, **dadurch gekennzeichnet, dass** sich die Leseoberfläche (S) bezüglich der Spur (2, 3) entlang eines Leseabstands (L), der im Wesentlichen konstant ist, erstreckt.

4. Aufbau nach einem der Ansprüche 1 bis 3, **dadurch gekennzeichnet, dass** die Muster (5) entlang derselben Leseoberfläche (S) angeordnet sind.

5. Aufbau nach einem der Ansprüche 1 bis 4, **dadurch gekennzeichnet, dass** sich die Magnetspuren (2, 3) in demselben Leseabstand (L) von den Mustern (5) erstrecken.

6. Aufbau nach einem der Ansprüche 1 bis 5, **dadurch gekennzeichnet, dass** die Magnetspuren (2, 3) eine konzentrische ringförmige Geometrie bezüglich der Rotationsachse des Drehelements aufweisen.

7. Aufbau nach Anspruch 6, **dadurch gekennzeichnet, dass** die Magnetspuren (2, 3) entlang des Außenumfangs der ringförmigen Geometrie gebildet sind, wobei sich die Leseoberfläche (S) umfänglich um den Umfang erstreckt und jedes Muster (5) derart angeordnet ist, dass die empfindliche Schicht (7) der empfindlichen Elemente eine Höhe aufweist, die sich radial erstreckt.

8. Aufbau nach Anspruch 6, **dadurch gekennzeichnet, dass** die Magnetspuren (2, 3) auf einer Seitenwand der ringförmigen Geometrie gebildet sind, wobei sich die Leseoberfläche (S) parallel zu der Wand erstreckt und jedes Muster (5) derart angeordnet ist, dass die empfindliche Schicht (7) der empfindlichen Elemente eine Höhe, die sich axial erstreckt, aufweist.

9. Aufbau nach einem der Ansprüche 1 bis 8, **dadurch gekennzeichnet, dass** das magnetoresistive Material Tunneleffekt aufweist.

10. Aufbau nach Anspruch 9, **dadurch gekennzeichnet, dass** jedes empfindliche Element der Muster (5) aus Tunnelübergängen gebildet ist, die eine Stapelung einer magnetischen Referenzmagnetschicht, einer Trennschicht und einer empfindlichen Schicht (7) umfassen, wobei der Widerstand zwischen den Magnetschichten von der relativen Ausrichtung ihrer Magnetisierung abhängt.

11. Aufbau nach einem der Ansprüche 1 bis 10, **dadurch gekennzeichnet, dass** der Codierer (1) aus einem Magnet gebildet ist, auf dem die Magnetspuren (2, 3) hergestellt sind.

12. Aufbau nach einem der Ansprüche 1 bis 11, **dadurch gekennzeichnet, dass** die Nebenspur (3) eine Anzahl von Magnetpolen umfasst, die von der der Hauptspur (2) unterschiedlich ist.

13. Aufbau nach einem der Ansprüche 1 bis 12, **dadurch gekennzeichnet, dass** sich die empfindlichen Schichten (7) parallel zu den Flächen (8a, 8b), auf welchen sie angeordnet sind, erstrecken.

## Claims

1. Mounting of a system for determining angular position on a rotating member, said system comprising:
- an encoder (1) which is rigidly connected in rotation to said rotating member, said encoder comprising a primary magnetic track (2) and a secondary magnetic track (3) which are each suitable for emitting a periodic signal representative of the movement of said encoder; and
- a sensor (4) having two patterns (5) of sensitive elements which are suitable for detecting the signals supplied by the tracks (2, 3) of the encoder (1), each pattern (5) being arranged along a reading surface (S) which extends to a reading distance (L) of a track (2, 3) to form a representative signal of the angular position of said track, said sensor further comprising a device (6) for processing the signals from the patterns (5) to determine the absolute angular position of the rotating member ;
each sensitive element of the patterns (5) having at least one sensitive layer (7) based on a magnetoresistive material wherein the resistance varies as a function of the magnetic signal of the track (2, 3) to be detected, each pattern (5) being arranged such that said sensitive layer extends in a general plane (P) which is perpendicular to the reading surface (S) of said track, said mounting being **characterised in that** the sensor (4) comprises an electronic board (8) having two faces (8a, 8b) whereon respectively a pattern (5) is arranged.

2. Mounting according to claim 1, **characterised in that** the patterns (5) have a length which extends along the magnetic track (2, 3).

3. Mounting according to one of claims 1 or 2, **characterised in that** the reading surface (S) extends with respect to the track (2, 3) along a reading distance (L) which is substantially constant.

4. Mounting according to any one of claims 1 to 3, **characterised in that** the patterns (5) are arranged along the same reading surface (S).

5. Mounting according to any one of claims 1 to 4, **characterised in that** the magnetic tracks (2, 3) extend to the same reading distance (L) of the patterns (5).

6. Mounting according any one of claims 1 to 5, **characterised in that** the magnetic tracks (2, 3) have a concentric annular geometry with respect to the axis of rotation of the rotating member.

7. Mounting according to claim 6, **characterised in that** the magnetic tracks (2, 3) are formed along the outer periphery of the annular geometry, the reading surface (S) extending circumferentially about said periphery and each pattern (5) being arranged such that the sensitive layer (7) of the sensitive elements has a height which extends radially.

8. Mounting according to claim 6, **characterised in that** the magnetic tracks (2, 3) are formed on a lateral wall of the annular geometry, the reading surface (S) extending parallel to said wall and each pattern (5) being arranged such that the sensitive layer (7) of the sensitive elements has a height which extends axially.

9. Mounting according to any one of claims 1 to 8, **characterised in that** the magnetoresistive material is of tunnel effect.

10. Mounting according to claim 9, **characterised in that** each sensitive element of the patterns (5) is formed from tunnel junctions comprising a stack of a reference magnetic layer, a separation layer and a sensitive layer (7), the resistance between the magnetic layers being dependant on the relative orientation of the magnetisation thereof.

11. Mounting according to any one of claims 1 to 10, **characterised in that** the encoder (1) is formed from a magnet whereon the magnetic tracks (2, 3) are produced.

12. Mounting according to any one of claims 1 to 11, **characterised in that** the secondary track (3) comprises a number of magnetic poles which is different to that of the primary track (2).

13. Mounting according to any one of claims 1 to 12, **characterised in that** the sensitive layers (7) extend parallel to the faces (8a, 8b) whereon they are arranged.
